# EUROPÄISCHE PATENTSCHRIFT

(11) **EP 0 718 961 B1**
(45) Veröffentlichungstag und Bekanntmachung des Hinweises auf die Patenterteilung: **25.10.2000**
(21) Anmeldenummer: 95120357.9
(22) Anmeldetag: 21.12.1995
(51) Int. Cl.: H02K 41/06

(54) **Elektrischer Impulsmotor**
Electric pulse motor
Moteur électrique à impulsion

(30) Priorität: 23.12.1994 DE 4446377
(43) Veröffentlichungstag der Anmeldung: 26.06.1996
(73) Patentinhaber: WANZL METALLWARENFABRIK GMBH, D-89336 Leipheim (DE)
(72) Erfinder: Kalms, Peter, D-77815 Bühl-Eisental (DE)
(74) Vertreter: Wolf, Eckhard, Dr.-Ing.

(56) Entgegenhaltungen:
- EP-A- 0 376 129
- DE-A- 3 141 536
- DE-C- 404 488
- US-A- 2 393 045
- US-A- 4 867 652
- IEE PROCEEDINGS B (ELECTRIC POWER APPLICATIONS), NOV. 1981, UK, Bd. 128, Nr. 6, ISSN 0143-7038, Seiten 313-322, XP002021872 ASHEN R A ET AL: "Aspects of the hypocycloidal reluctance motor"
- PATENT ABSTRACTS OF JAPAN vol. 15, no. 438 (E-1130), 8.November 1991 & JP 03 183353 A (FANUC), 9.August 1991,

## Beschreibung

Die Erfindung betrifft einen elektrischen Impulsmotor, bestehend aus einem Stator und aus einem Rotor, wobei der Stator eine Anzahl ansteuerbarer Elektromagnete aufweist, die kreisförmig angeordnet sind und wobei der durch einen Eisenzylinder gebildete Rotor durch taktweises Erregen der Elektromagnete in eine translatorische Drehbewegung versetzbar und mit einer zur Weitergabe der Drehbewegung bestimmten Einrichtung ausgestattet ist, und wobei die Elektromagnete vom Rotor mit Spiel umschlossen und die zur Weitergabe der Drehbewegung des Rotors bestimmte Einrichtung an der Außenmantelfläche des Rotors und/oder an einer der beiden Stirnseiten des Rotors angeordnet ist.

Typische Vertreter dieser Motorengattung sind in der DE 31 41 536 A1 und in der EP 0 376 129 A1 beschrieben. Bei diesen Motoren ist die zur Weitergabe der vom Rotor ausgehenden Drehbewegung bestimmte Einrichtung durch wenigstens eine Antriebswelle nebst den erforderlichen Lagerelementen gebildet, wobei die wenigstens eine Antriebswelle den Eisenzylinder und damit den Rotor durchdringt.

Zur eben genannten Motorgattung zählt auch ein selbstkommutierender Motor, der in der deutschen Auslegeschrift DE 20 04 343 beschrieben ist. Anstelle einer Antriebswelle weist dieser Motor ein Ausgangszahnrad auf, das ebenfalls den Rotor durchdringt und auf zwei Kugellagern gelagert ist.

Ohne Antriebswelle oder Antriebszahnrad kommt hingegen ein Impulsmotor aus, der durch die japanische Offenlegungsschrift 183353/1991 offenbart ist. Die Kraftübertragung erfolgt bei diesem Motor über einen elastisch deformierbaren Ring, der an seiner Außenmantelfläche eine Verzahnung aufweist, die im Eingriff mit einer weiteren Verzahnung steht, welche an der Innenwand eines den deformierbaren Ring einschließenden zylindrischen Ringes angeordnet ist. Der deformierbare Ring ist in regelmäßigen Abständen mit Permanentmagneten ausgestattet. Innerhalb des deformierbaren Ringes ist ein Stator vorgesehen, der eine Vielzahl elektrisch ansteuerbare Pole aufweist. Zum Antrieb werden in wechselnder Folge diametral zwei Pole angesteuert, so daß Magnetfelder entstehen, die auf die Permanentmagneten des deformierbaren Ringes so einwirken, daß dieser sich laufend wechselnd elliptisch verformt und so über die Verzahnungen den zylindrischen Ring in eine Rotationsbewegung versetzt.

Als nachteilig kann bei den drei zuerst beschriebenen Motoren angesehen werden, daß zur Funktion dieser Motoren eine Antriebswelle beziehungsweise ein Ausgangszahnrad sowie wenigstens zwei Lagerelemente vorgesehen sein müssen. Diese Teile erhöhen zwangsläufig den Bauteileaufwand und damit die Herstellkosten.

Bei dem in der japanischen Offenlegungsschrift beschriebenen Impulsmotor hingegen müssen Permanentmagnete in den deformierbaren Ring eingesetzt werden, was ebenfalls die Herstellkosten erhöht und die angestrebte gleichmäßige Verformbarkeit des deformierbaren Ringes nachteilig beeinflußt. Ferner ist die Fertigung der Verzahnungen relativ kostenintensiv und beispielsweise bei Mikromotoren nur schwer realisierbar. Schließlich werden immer zwei entgegengesetzte Pole angesteuert, so daß sich ein Magnetfeld über einen großen Bereich aufbaut und deshalb Leistungsverluste zu befürchten sind.

Ein weiterer Impulsmotor der eingangs genannten Art ist aus der DE-PS 404488 bekannt. Bei diesem Motor werden die Magnetspulen durch eine Gleichstromquelle gespeist, deren Pluspol mit einem Ende sämtlicher Magnetspulen verbunden ist, während der Minuspol an dem Körper des Motors liegt. Die anderen Enden der Magnetspulen sind jeweils mit durch Glimmer isolierten Kupferstegen verbunden. Die Schließung des Stromkreises wird durch den mit dem Umfassungsring der Magnete sich berührenden Eisenring (Rotor) hergestellt. Der Rotor stellt hierbei also gleichsam als Schalter einen notwendigen Teil des Stromkreises dar. Durch die ständig aufeinanderfolgenden Berührungen zwischen dem Rotor und den Kupferstegen entstehen starke Laufgeräusche, die als äußerst störend empfunden werden. Weiterhin ist hierdurch eine Isolierung des Rotors vom Stator - z. B. durch Eingießen des Stators in eine Kunststoffmasse - prinzipiell ausgeschlossen.

Grundlegende elektrotechnische Aspekte der Funktionsweise von Impulsmotoren werden von R. A. Ashen et al. in IEE Proceedings B (Electric Power Applications), November 1981, Band 128, Nr. 6, Seiten 313 bis 322, beschrieben.

Ausgehend hiervon liegt der Erfindung die Aufgabe zugrunde, einen elektrischen Impulsmotor bereitzustellen, bei dem die oben beschriebenen Nachteile vermieden werden.

Gemäß der Erfindung wird diese Aufgabe dadurch gelöst, daß der Rotor an elastischen und gleitfähigen Ringen abgestützt ist, die den Stator umfassen.

Nachfolgend werden weitere Vorteile beschrieben, die sich durch den erfindungsgemäßen Impulsmotor ergeben.
So läßt sich durch die relativ geringe Mitnahmekraft der Einrichtung und durch die Massenträgheit des anzutreibenden Rohrstückes, das Bestandteil eines Gerätes, einer Maschine oder dergleichen sein kann, eine homogene Drehbewegung des Rohrstückes erreichen wobei in vorteilhafter Weise ein gewisser Schlupfeffekt zwischen Rotor und Rohrstück ausgenutzt wird.
Durch das Auskleiden der Innenwand des Rotors mit hochgleitfähigem Material oder durch das Abrollen des Rotors an am Stator befindlichen stoßdämpfenden ringförmigen Teilen erzeugt der Impulsmotor ein nur sehr geringes Laufgeräusch.
Wird der Luftspalt zwischen dem Stator und der Innenwand des Rotors äußerst klein gehalten, läßt sich ein hoher Wirkungsgrad für den Impulsmotor erzielen.
Ein Ändern des Übersetzungsverhältnisses läßt sich auf einfache Weise durch Verändern des Rotorinnen- und des Rotoraußendurchmessers erreichen.
Auch ein Ändern der Höhe und des Durchmessers des Stators ist auf ebenfalls einfache Weise möglich, so daß sich ein leichtes Anpassen des Impulsmotors an unterschiedliche praktische Anforderungen erzielen läßt.
Ebenfalls bei Anwendungsfällen für die Praxis lassen sich die zur Funktion des Impulsmotors erforderliche Leistungs- und Steuerelektronik explosionsgeschützt ausführen.
Der Stator wiederum kann auf geeignete Weise vergossen werden, so daß der Betrieb des Impulsmotors in Wasser oder anderen Flüssigkeiten möglich ist. Bei dieser Anwendung kann der Stator von dem ihn umgebenden flüssigen Medium gekühlt werden.
Durch den vergossenen Aufbau des Stators läßt sich der Impulsmotor auch in empfindlichen Bereichen (Klinik, Labor, Lebensmittel) einsetzen.
Auch kann der Rotor fest mit dem Rohrstück verbunden sein und mit diesem translatorische Bewegungen ausführen, so daß der Impulsmotor in Flüssigkeiten eingesetzt als Schaufelrad oder Pumpe agieren kann.

Ein äußerst bedeutender Vorteil zeigt sich dadurch, daß keine die Bauart begrenzenden Lagerungen, etwa für eine Antriebswelle, erforderlich sind. Dadurch ist es möglich, den Impulsmotor in extrem kleiner Bauweise herzustellen, beispielsweise in Form von Mikropumpen.
Schließlich entstehen durch den relativ starken magnetischen Schluß zwischen den Elektromagneten und dem jeweils entsprechenden Segment oder Abschnitt des Rotors nur geringe wirksame magnetische Streu- und Störfelder.

Die Erfindung wird anhand schematisch dargestellter Ausführungsbeispiele näher erläutert. Es zeigt
- Fig. 1: mit Blick zur Längsachse des Stators und des Rotors einen elektrischen Impulsmotor, dessen Rotor mit einer Reibschicht ausgestattet ist;
- Fig. 2: den gleichen Motor in Schnittdarstellung;
- Fig. 3: in einer Draufsicht einen Rotor, bei dem die Reibschicht durch aufsetzbare Streifen gebildet ist;
- Fig. 4: ein weiteres Ausführungsbeispiel, bei dem der Rotor an stoßdämpfenden Ringen abgestützt ist, die sich am Stator befinden;
- Fig. 5: ein Ausführungsbeispiel, entsprechend Fig. 2, jedoch mit einem am Rotor befindlichen Vorsprung sowie
- Fig. 6: einen Impulsmotor, bei dem die Reibschicht an einer Stirnseite des Rotors vorgesehen ist.

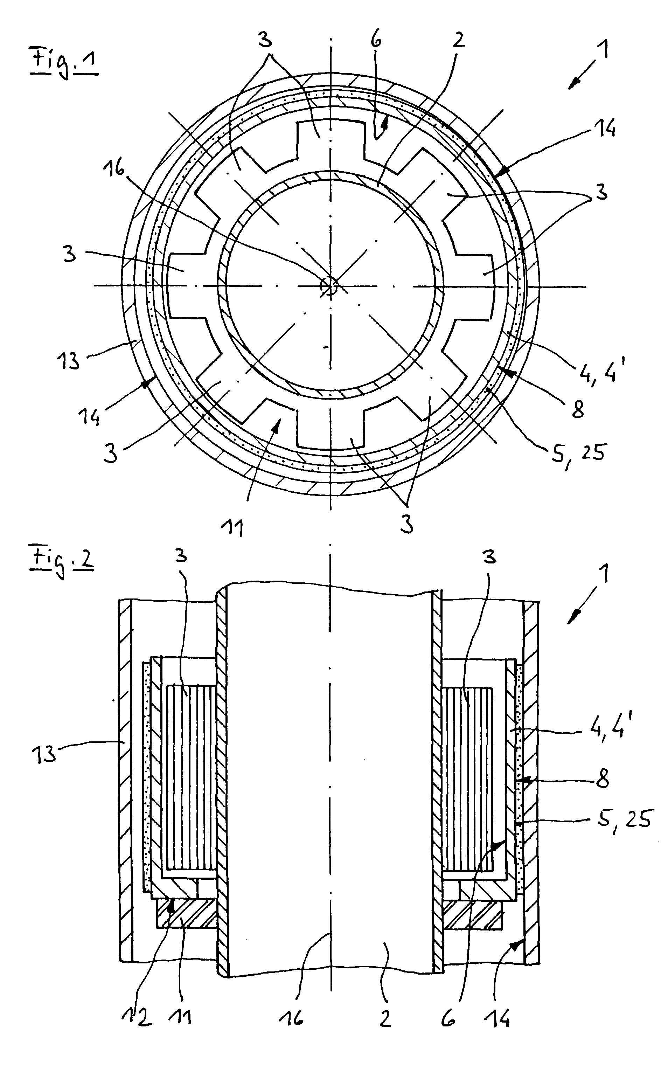

Der in Fig. 1 und in Fig. 2 dargestellte elektrische Impulsmotor 1 weist einen zentral angeordneten Stator 2 auf, der mit Elektromagneten 3 ausgestattet ist, die kreisförmig angeordnet sind und durch eine bekannte, nicht näher dargestellte Steuerungseinrichtung elektrisch ansteuerbar sind. Der Stator 2 ist innerhalb eines Rotors 4 angeordnet, der durch einen nicht verformbaren Eisenzylinder 4' gebildet ist. Der Rotor 4 umschließt die Elektromagnete 3 mit Spiel. An der Außenmantelfläche 8 des Rotors 4 ist eine Einrichtung 25 in Form einer Reibschicht 5 aufgetragen oder angeordnet. Die Reibschicht 5 besteht bevorzugt aus einem hochelastischen, gleitfähigen Kunststoff. Der Rotor 4 ist von einem zylindrischen Rohrstück 13 umschlossen, das im Beispiel Teil einer Schwenksäule einer elektrisch ansteuerbaren Türe ist. Das Rohrstück kann natürlich auch Bestandteil einer Maschine, eines Gerätes oder einer anderen elektrisch antreibbaren Vorrichtung sein. Das Rohrstück 13 ist koaxial zur Längsachse 16 des Stators 2 angeordnet und um diese drehbar gelagert, während der durch den Eisenzylinder 4' gebildete Rotor 4 auf einer Lagerebene 11, vgl. Fig. 2, nach unten hin abgestützt ist und in bekannter Weise durch geeignetes taktweises Erregen jeweils zweier aufeinanderfolgender Elektromagnete 3 in eine translatorische Rechts- und Linksdrehung versetzbar ist. Derartiges taktweises Erregen von Elektromagneten mit daraus resultierendem Drehen eines Rotors ist durch den Stand der Technik bekannt und z.B. in der EP 0 376 129 A1 ausführlich beschrieben, so daß sich hier eine erneute Beschreibung dieser Antriebsart erübrigt. Durch die translatorische Bewegung des Rotors 4 berühren ständig wechselnde Abschnitte der Reibschicht 5 des Rotors 4 Teilflächen der Innenmantelfläche 14 des Rohrstückes 13 in Folge. Durch die aufeinanderfolgenden Reibschlüsse zwischen dem sich drehenden Rotor 4 und dem drehbar angeordneten Rohrstück 13 wird dieses ebenfalls in eine Drehbewegung versetzt, die umso gleichmäßiger ist, je mehr Elektromagnete 3 vorgesehen sind und je mehr Reibschlüsse zwischen dem Rotor 4 und dem Rohrstück 13, bezogen auf 360°, stattfinden. Es ist zweckmäßig, den Innenmantel 6 des Rotors 4 dünnschichtig mit abriebfestem Material auszukleiden, um einen möglichst geräuscharmen Lauf des Rotors zu erzielen.

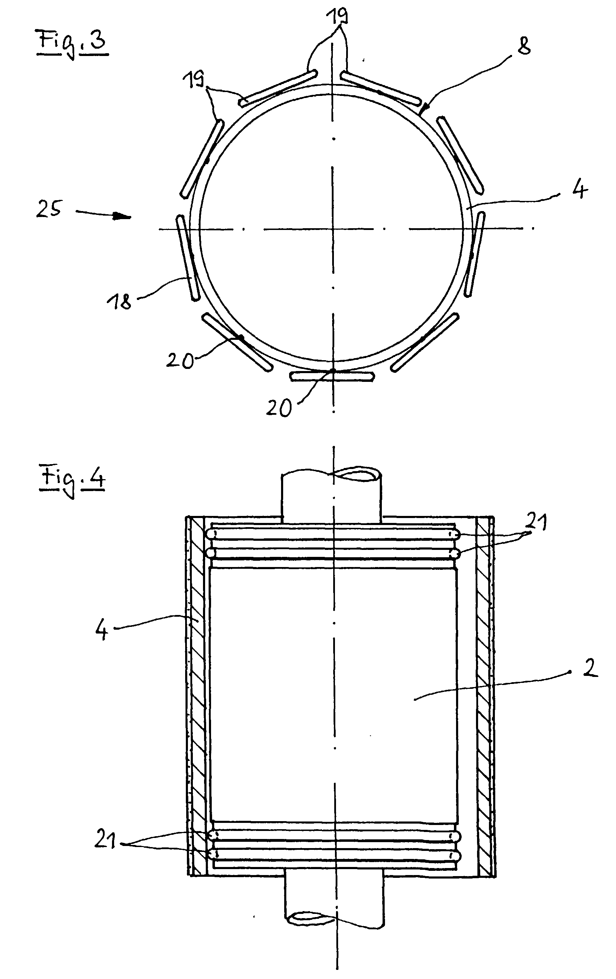

Anstelle einer Reibschicht 5 kann an der Außenmantelfläche 8 des Rotors 4 auch eine Einrichtung 25 in Form von einzelnen, aus Kunststoff bestehenden Streifen 18 angeordnet sein. Fig. 3 zeigt in einer Draufsicht auf einen Rotor 4 eine derartige Ausführungsform. Die ebenfalls hochelastischen, gleitfähigen Streifen 18 sind an der Außenmantelfläche 8 bevorzugt so angeordnet, daß die Befestigungsstellen 20 der Streifen unregelmäßig verteilt und vorzugsweise parallel zur Längsachse 16 des zylindrischen Rotors 4 verlaufen. Mit dieser Maßnahme kann dem Aufbau von störenden Schwingungen beim Betrieb des Impulsmotors 1 entgegengewirkt werden. Die beiden Enden 19 der Streifen 18 sind bevorzugt nicht mit dem Rotor 4 verbunden, so daß diese wie kleine Lappen von der Außenmantelfläche 8 des Rotors 4 abstehen. Diese Maßnahme erhöht den schlupfartigen Reibeffekt zwischen dem Rotor 4 und dem Rohrstück 13.

Bei einem Ausführungsbeispiel gemäß Fig. 4 sind am Stator 2 umlaufende elastische Ringe 21, bevorzugt handelsübliche O-Ringe vorgesehen, die ringförmig den Stator 2 umfassen und Abstützstellen für den sich bewegenden Rotor 4 bilden. Die Ringe können an die Stelle jenes in Fig. 1 beschriebenen dünnschichtig aufgetragenen, abriebfesten Gleitmaterials treten, das am Innenmantel 6 des Rotors 4 vorgesehen sein kann.

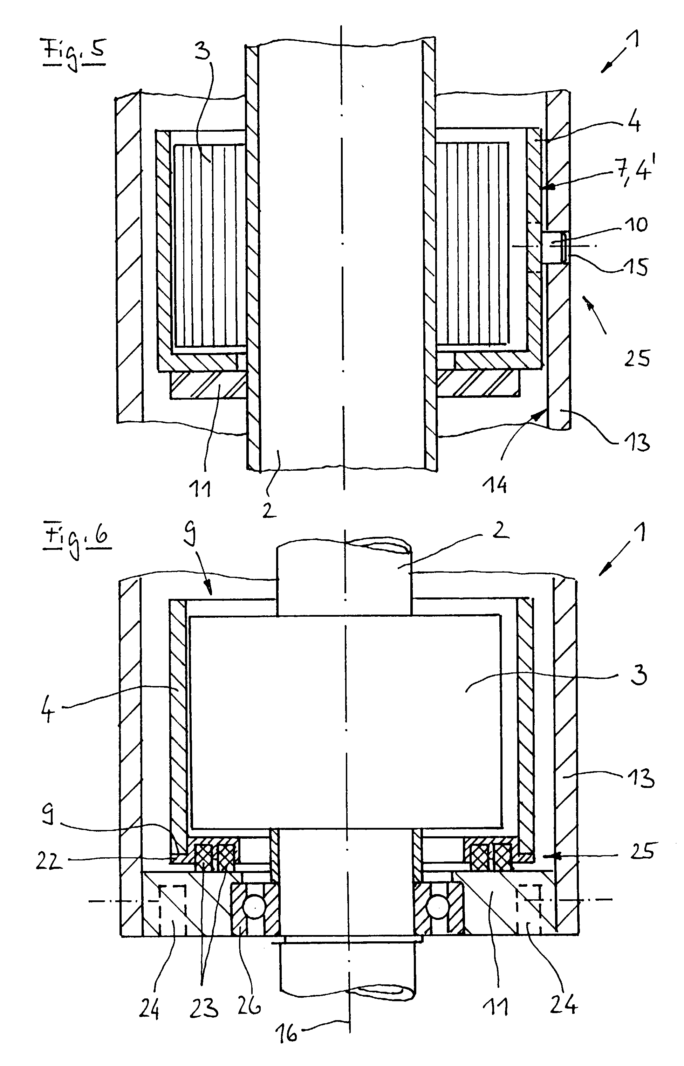

Fig. 5 zeigt im Prinzip den gleichen Impulsmotor 1, wie er in Fig. 1 und 2 beschrieben ist, jedoch mit dem Unterschied, daß anstelle einer als Reibschicht 5 ausgebildeten Einrichtung 25 nunmehr eine Einrichtung 25 in Form eines Vorsprunges 10 vorgesehen ist, der an der Wandung 7 des Eisenzylinders 4' angeordnet ist, nach außen vom Rotor 4 absteht und in eine am Rohrstück 13 vorgesehene Vertiefung 15 eingreift, so daß beim translatorischen Drehen des Rotors 4 das Rohrstück 13 durch den Vorsprung 10 in eine Drehbewegung versetzbar ist. Anstelle eines Vorsprunges 10 kann in der Wandung 7 des Rotors 4 auch eine Vertiefung 15 vorgesehen sein, in die ein an der Innenmantelfläche 14 des Rohrstückes 13 befindlicher Vorsprung 10 eingreift. Der Vorsprung 10 kann als festes oder elastisches Teil gestaltet oder auch gelagert sein.

Bei allen bisher gezeigten Ausführungsbeispielen stützt sich der Rotor 4 mit seiner unteren Ringfläche 12 auf der Lagerebene 11 ab. Die Lagerebene 11 kann dabei kugellagerartig ausgebildet sein. Sie kann aber auch als Gleitlager gestaltet sein und aus Messing oder aus einem anderen mit vorzüglichen Gleiteigenschaften ausgestatteten Material bestehen. Entsprechender Kunststoff bietet sich dafür an. Der als zentrales Bauteil gestaltete Stator 2 ist ortsfest angeordnet. Bei einer horizontalen Anordnung des Stators 2 und damit des Rotors 4, also bei horizontaler Lage der Längsachse 16 ist der Rotor 4 von zwei, nunmehr senkrecht angeordneten Lagerebenen 11 begrenzt und damit in seiner Lage gehalten.

Fig. 6 zeigt einen Impulsmotor 1, bei dem die Einrichtung 25 zur Weitergabe der vom Rotor 4 ausgehenden Drehbewegung an einer der beiden Stirnseiten 9 des Rotors 4 vorgesehen ist. Bei senkrecht angeordnetem Stator 2 ist die Einrichtung 25 an der unten liegenden Stirnseite des Rotors 4 angeordnet. Auch bei diesem Ausführungsbeispiel sind die Elektromagnete 3 des Stators 2 vom Rotor 4 mit Spiel umschlossen. An der unten liegenden Stirnseite 9 des Rotors 4 ist ein ringförmiger Adapter 22 vorgesehen, der im Beispiel eine Einrichtung 25 in Form von zwei Filzringen 23 trägt, die auf der Lagerebene 11 aufliegen. Im Gegensatz zu allen bisher gezeigten Ausführungsbeispielen ist hier die Lagerebene 11 als ein um die Längsachse 16 drehbar gelagertes und über ein Kugellager 26 am Stator 2 abgestütztes Teil gestaltet und mit dem Rohrstück 13 drehfest verbunden. An der Lagerebene 11 können von unten her Permanentmagnete 24 eingesetzt sein, die den Rotor 4 gegen die Lagerebene 11 drücken. Auch bei diesem Ausführungsbeispiel wird durch taktweises Erregen der Elektromagnete 3 der Rotor 4 in eine translatorische Drehbewegung versetzt, die über die Filzringe 23 auf die Lagerebene 11 übertragen wird und diese zum Drehen um die Längsachse 16 veranlaßt. Da das Rohrstück 13 drehfest mit dem Rotor 4 verbunden ist, dreht sich das Rohrstück 13 mit. Anstelle von wenigstens einem Filzring 23 ist als Einrichtung 25 zur Weitergabe der Drehbewegung des Rotors 4 auch wenigstens ein anderes geeignetes Ringteil denkbar, das gleitfähig, elastisch oder hochelastisch ausgebildet ist und insbesondere aus Kunststoff besteht.

Durch die vielfältigen Verwendungsmöglichkeiten der vorgeschlagenen Impulsmotoren 1 sind an dieser Stelle keine weiteren konstruktiven Details, beispielsweise die einer Türe, einer Maschine, eines Gerätes oder einer Vorrichtung näher dargestellt. Für diese Details steht stellvertretend das Rohrstück 13. Abschließend bleibt zu erwähnen, daß die in den Ausführungsbeispielen geschilderten erfinderischen Ideen unter anderem auch so kombinierbar sind, daß ein elektrischer Impulsmotor 1 gebildet ist, bei dem die zur Weitergabe der Drehbewegung des Rotors 4 bestimmte Einrichtung 25 sowohl an der Außenmantelfläche 8 des Rotors als auch an einer der beiden Stirnseiten 9 des Rotors 4 angeordnet ist.

## Patentansprüche

1. Elektrischer Impulsmotor, bestehend aus einem Stator (2) und aus einem Rotor (4), wobei der Stator (2) eine Anzahl ansteuerbarer Elektromagnete (3) aufweist, die kreisförmig angeordnet sind, wobei der durch einen Eisenyzlinder (4') gebildete Rotor (4) durch taktweises Erregen der Elektromagnete (3) in eine translatorische Drehbewegung versetzbar und mit einer zur Weitergabe der Drehbewegung bestimmten Einrichtung (25) ausgestattet ist und wobei die Elektromagnete (3) vom Rotor mit Spiel umschlossen und die zur Weitergabe der Drehbewegung des Rotors (4) bestimmte Einrichtung (25) an der Außenmantelfläche (8) des Rotors (4) und/oder an einer der beiden Stirnseiten (9) des Rotors (4) angeordnet ist, **dadurch gekennzeichnet,** daß der Rotor (4) an elastischen und gleitfähigen Ringen (21) abgestützt ist, die den Stator (2) umfassen.

2. Elektrischer Impulsmotor nach Anspruch 1, dadurch **gekennzeichnet,** daß die Einrichtung (25) durch eine hochelastische, gleitfähige Reibschicht (5) gebildet ist

3. Elektrischer Impulsmotor nach Anspruch 1, dadurch **gekennzeichnet,** daß die Einrichtung (25) durch hochelastische, aus gleitfähigem Kunststoff bestehende Streifen (18) gebildet ist.

4. Elektrischer Impulsmotor nach Anspruch 3, dadurch **gekennzeichnet,** daß die Enden (19) der Streifen (18) nicht mit der Außenmantelfläche (8) des Rotors (4) verbunden sind.

5. Elektrischer Impulsmotor nach einem der Ansprüche 1, 3 und 4, dadurch **gekennzeichnet,** daß die Befestigungsstellen (20) für die Streifen (18) unregelmäßig verteilt sind und vorzugsweise nicht parallel zur Längsachse (16) des Rotors (4) verlaufen.

6. Elektrischer Impulsmotor nach einem der Ansprüche 1 bis 5, dadurch **gekennzeichnet,** daß die Einrichtung (25) durch einen vom Rotor (4) abstehenden Vorsprung (10) oder durch eine Vertiefung (15) gebildet ist wobei der Vorsprung (10) entweder ortsfest angeordnet oder federnd gelagert ist.

7. Elektrischer Impulsmotor nach einem der Ansprüche 1 bis 6, dadurch **gekennzeichnet,** daß der Rotor (4) an wenigstens einer Lagerebene (11) abgestützt ist.

8. Elektrischer Impulsmotor nach einem der Ansprüche 1 bis 7, dadurch **gekennzeichnet,** daß die Lagerebene (11) entweder kugellagerartig ausgebildet, oder als Gleitlager gestaltet oder aus Messing oder aus einem anderen, Gleiteigenschaften aufweisenden Material gefertigt ist.

9. Elektrischer Impulsmotor nach einem der Ansprüche 1 bis 8, dadurch **gekennzeichnet,** daß die Einrichtung (25) durch wenigstens ein gleitfähiges, elastisches Ringteil, insbesondere durch wenigstens einen Filzring (23) gestaltet ist, der an einer Stirnseite (9) des Rotors angeordnet ist und an der Lagerebene (11) aufliegt und daß die Lagerebene (11) um die Längsachse (16) drehbar gelagert ist.

10. Elektrischer Impulsmotor nach einem der Ansprüche 1 bis 9, dadurch **gekennzeichnet,** daß der Innenmantel (6) des Rotors (4) dünnschichtig mit abriebfestem Material ausgekleidet ist.

11. Elektrischer Impulsmotor nach einem der Ansprüche 1 bis 10, dadurch **gekennzeichnet,** daß in der Lagerebene (11) Permanentmagnete (24) angeordnet sind, die den Rotor (4) gegen die Lagerebene (11) drücken.

12. Elektrischer Impulsmotor nach einem der Ansprüche 1 bis 9, dadurch **gekennzeichnet,** daß durch Verändern des Rotorinnen- und des Rotoraußendurchmessers eine Änderung des Übersetzungsverhältnisses erzielbar ist.

## Claims

1. An electric pulse motor, comprising a stator (2) and a rotor (4), wherein the stator (2) comprises a plurality of triggerable electromagnets (3) which are arranged in a circular fashion, wherein the rotor (4) which is formed by an iron cylinder (4') is adapted to be moved in a translatory rotary motion by means of cyclic excitation of the electromagnets (3) and is provided with means (25) for transferring the rotatary movement, and wherein the electromagnets (3) are enclosed by the rotor with clearance and the means (25) for transferring the rotary movement of the rotor (4) is disposed at the exterior surface area (8) of the rotor (4) and/or at one of two front faces (9) of the rotor (4), **characterized in that** the rotor (4) is supported on elastic sliding rings (21) which enclose the stator (2).

2. The electric pulse motor of claim 1, **characterized in that** the means (25) is formed by a highly elastic, slideable friction layer (5).

3. The elctric pulse motor of claim 1, **characterized in that** the means (25) is comprised of highly elastic strips (18) consisting of a slideable synthetic material.

4. The electric pulse motor of claim 3, **characterized in that** the ends (19) of the strips (18) are not connected to the exterior surface area (8) of the rotor (4).

5. The electric pulse motor of one of claims 1, 3, and 4, **characterized in that** the connections points (20) for the strips (18) are distributed irregularly and preferably not parallel to the longitudinal axis (16) of the rotor (4).

6. The electric pulse motor of one of claims 1 to 5, **characterized in that** the means (25) is formed by a projection (10) projecting over the rotor (4) or by a recess (15), wherein the projection (10) is either fixed in location or borne resiliently.

7. The electric pulse motor of one of claims 1 to 6, **characterized in that** the rotor (4) is borne at at least one bearing plane (11).

8. The electric pulse motor of one of claims 1 to 7, **characterized in that** the bearing plane (11) is formed to be a roller bearing or a plain bearing, or that it consists of brass or some other material having anti-frictional properties.

9. The electric pulse motor of one of claims 1 to 8, **characterized in that** the means (25) id formed by at least one anti-frictional, elastic ring member, in particular by at least one felt ring (23), which is disposed at one front face (9) of the rotor and is in contact with the bearing plane (11), and that the bearing plane (11) is adapted to be rotated about the longitudinal axis (16).

10. The electric pulse motor of one of claims 1 to 9, **characterized in that** the interior surface area (6) of the rotor (4) is covered with a thin layer of non-abrasive material.

11. The electric pulse motor of one of claims 1 to 10, **characterized in that** permanent magnets (24) are disposed in the bearing plane (11), which pull the rotor (4) toward the bearing plane (11).

12. The electric pulse motor of one of claims 1 to 9, **characterized in that** the transmission ratio is adapted to be changed by changing the inner and the outer diameter of the rotor.

## Revendications

1. Moteur électrique à impulsions comprenant un stator (2) et un rotor (4), le stator (2) présentant un certain nombre d'électro-aimants activables (3) agencés circulairement ; le rotor (4), formé par un cylindre en fer (4'), pouvant être animé d'un mouvement de rotation translatoire par suite d'une excitation cadencée des électro-aimants (3), et étant équipé d'un dispositif (25) destiné à transmettre le mouvement de rotation ; et les électro-aimants (3) étant entourés avec jeu par le rotor, et le dispositif (25), destiné à transmettre le mouvement de rotation du rotor (4), étant placé sur la surface d'enveloppe extérieure (8) du rotor (4) et/ou sur l'une des deux faces extrêmes (9) du rotor (4), caractérisé par le fait que le rotor (4) prend appui sur des anneaux (21) élastiques et aptes à glisser, qui ceinturent le stator (2) .

2. Moteur électrique à impulsions selon la revendication 1, caractérisé par le fait que le dispositif (25) est formé par une couche de frottement (5) apte à glisser et douée d'une haute élasticité.

3. Moteur électrique à impulsions selon la revendication 1, caractérisé par le fait que le dispositif (25) est formé par des bandes (18) douées d'une haute élasticité, constituées d'une matière plastique apte à glisser.

4. Moteur électrique à impulsions selon la revendication 3, caractérisé par le fait que les extrémités (19) des bandes (18) ne sont pas reliées à la surface d'enveloppe extérieure (8) du rotor (4).

5. Moteur électrique à impulsions selon l'une des revendications 1, 3 et 4, caractérisé par le fait que les zones de fixation (20) affectées aux bandes (18) sont réparties de façon irrégulière et ne s'étendent pas, de préférence, parallèlement à l'axe longitudinal (16) du rotor (4).

6. Moteur électrique à impulsions selon l'une des revendications 1 à 5, caractérisé par le fait que le dispositif (25) est formé par une protubérance (10) saillant au-delà du rotor (4), ou par une creusure (15), la protubérance (10) occupant une position fixe, ou étant montée élastiquement.

7. Moteur électrique à impulsions selon l'une des revendications 1 à 6, caractérisé par le fait que le rotor (4) prend appui sur au moins un plan de portée (11).

8. Moteur électrique à impulsions selon l'une des revendications 1 à 7, caractérisé par le fait que le plan de portée (11) est réalisé à la manière d'un roulement à billes ou est conçu comme un coussinet de glissement, ou bien est fabriqué en du laiton ou en un autre matériau doté de propriétés de glissement.

9. Moteur électrique à impulsions selon l'une des revendications 1 à 8, caractérisé par le fait que le dispositif (25) revêt la forme d'au moins une pièce annulaire élastique apte à glisser, en particulier d'au moins un anneau en feutre (23) disposé à une face extrême (9) du rotor, et reposant à plat sur le plan de portée (11) ; et par le fait que le plan de portée (11) est monté à rotation autour de l'axe longitudinal (16).

10. Moteur électrique à impulsions selon l'une des revendications 1 à 9, caractérisé par le fait que l'enveloppe intérieure (6) du rotor (4) est revêtue d'une mince couche d'un matériau résistant à l'usure par frottement.

11. Moteur électrique à impulsions selon l'une des revendications 1 à 10, caractérisé par le fait que des aimants permanents (24), situés dans le plan de portée (11), pressent le rotor (4) contre ledit plan de portée (11).

12. Moteur électrique à impulsions selon l'une des revendications 1 à 9, caractérisé par le fait qu'une modification du rapport de démultiplication peut être obtenue en faisant varier le diamètre intérieur et le diamètre extérieur du rotor.
